# EUROPEAN PATENT APPLICATION

(11) **EP 1 727 039 A1**
(43) Date of publication of application: **29.11.2006**
(21) Application number: 05011448.7
(22) Date of filing: 27.05.2005
(51) Int. Cl.: G06F 9/44

(54) **A method for executing a graphic program using asymmetric linkages and an asynchronous procedure**

(71) Applicant: Lo, Tse-Win, Taipei (TW)
(72) Inventor: Lo, Tse-Win, Taipei (TW)
(74) Representative: Meyer, Ludgerus

(57) **Abstract**

A method is presented for executing a graphic program using asymmetric linkages and an asynchronous procedure. An asymmetric linkage uses different types of data structure to record and store the relationship between an output port and input port. The asynchronous procedure of the present invention implies that the steps of data transfer from input port to output port are not performed in the same thread. With this invention, the problems of reentrance and stack overflow caused by the link structure of loop are eliminated, the multi-task behaviors of branch and pipeline can be simulated by a single thread, and multiple input ports can be implemented by one function.

## Description

### BACKGROUND OF THE INVENTION

### 1. Field of the invention

The present invention relates to a method for executing a graphic program using asymmetric linkages and an asynchronous procedure.

### 2. Description of the prior art

Communication methods between components of a graphic program may take many forms. "Graphical Configuration Programming" (IEEE Computer, Oct, 1989) describes a method in which each component has its own input ports and output ports. A software system can be constructed by components and linkages linking the input ports and the output ports together.

With this construction method, execution methods, used by prior systems, for example, "Method and System for Using Editor Objects to Connect Components" (US. Patent, US 6,182,160), demonstrate two characteristics: 1. Each of the output port and the input port is a member function of a component object; 2. When a component outputs a message, a specific system call is called to inform the execution environment of the ready status of information to be sent from an output port. The execution environment then calls the output port to retrieve the information, searches the corresponding input port and input component by the linkages, and finally, calls the input port of the input component to transfer the information to the intended target. With this method, the sequential steps of informing, calling the output port, searching, and transferring to the input target are performed in the same thread.

However, under these assumptions, the following problems may occur:
1. If the output port is a member function, the only way to get the output data is through the return value of the member function. This requires that the output information must be of a single data structure. In a large-scale software system, complex information often needs to be exchanged mutually. Therefore, it is essential for each exchanged data to be defined by a data structure, which increases the cost of system development.
2. If the information transfer is performed in a single thread, the problem of reentrance may occur when a loop is formed from the component linkages. Furthermore, it is apt to cause a situation of stack overflow. In many automatic control systems with feedback facilities, which inevitably need a program structure linked in a loop, the use of such an execution method can cause problems in modeling and designing of the system.
3. Because an input port is implemented by a member function, if the operation of a component involves a sequence of input data, the operation scheme may require many member functions to implement all the input ports. This can result in a continuous procedure divided into many program segments, thus increasing the difficulty of component design.

### SUMMARY OF THE INVENTION

The main objective of the present invention is to provide a method for executing a graphic program using asymmetric linkages and an asynchronous procedure.

In the present invention, an asymmetric linkage utilizes different types of data structure to record and store the relationship between an output port and input port. An output port is stored as an identifier. When a component performs an output, this identifier is used to mark the source of the data transfer, for the purpose of searching the corresponding input target using linkage records. An input port is an entry point of a program segment, and may be categorized into two different types. TYPE 1 is a break point of a thread halting in a component. It is stored as an identifier used to mark the break point. TYPE 2 is a member function of a component. It is stored as a reference to the appropriate member function called to transfer the data. Both of these two types of input ports are used to describe the target of data transferring. The linkage records are stored in the output table of the output socket.

The asynchronous procedure of the present invention implies that the steps of data transferring from the input port to the output port are not performed in the same thread. Instead, this method uses a message queue as an agency to receive data from an output port of a component, followed by the use of a specific queue thread to perform the transfer. These steps of transfer include: getting data from the message queue, searching the input component and the input port by linkage records, and passing the data by the input port to the input component.

To achieve the above-mentioned objective of the invention, a method for executing a graphic program according to the present invention is provided and comprised of:
a. Activating an execution environment;
b. Using the install function of the execution environment to install components;
c. Using the link function of the execution environment to build linkages;
d. Calling the output function by a specified component using a corresponding socket, and outputting a specified parameter list from a specified output port;
e. Using the output table of the located socket to find the input socket and input port corresponding to the output port;
f. Packing the input socket, the input port, and the parameter list that found into a message packet;
g. Entering the critical section of the message queue;
h. Pushing the message packet on to the end of the message queue;
i. Activating the queue thread; and
j. Exiting from the critical section of the message queue.

To provide an overall understanding, the present invention is now described in detail with the aid of an embodiment.

### BRIEF DESCRIPTION OF THE DRAWINGS

Fig. 1 shows a flowchart illustrating the method for executing a graphic program according to the present invention;
Fig. 2 shows a flowchart of the actions of the link function according to the present invention;
Fig. 3 shows a flowchart of the actions of a queue thread according to the present invention;
Fig. 4 shows a flowchart of the actions for executing the operable message according to the present invention;
Fig. 5 shows a flowchart of the actions for testing whether a message is operable according to the present invention;
Fig. 6A shows a flowchart of the actions for the first part of a socket waiting for an input from an TYPE 1 input port until the thread is halted according to the present invention;
Fig. 6B shows a flowchart of the actions for the second part of a socket waiting for an input from the thread awakened from the break point according to the present invention; and
Fig. 7 shows a block diagram illustrating a card shuffler designed as an embodiment of the present invention.

### DESCRIPTION OF THE PREFERRED EMBODIMENTS

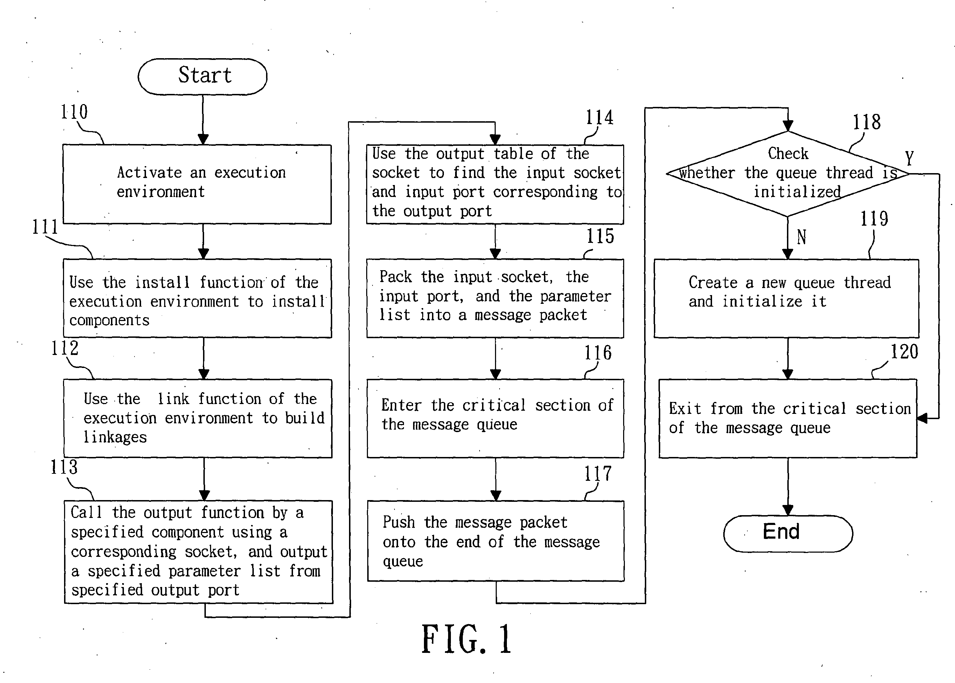

A flowchart is shown in Fig. 1 to demonstrate the steps of the method for executing a graphic program according to the present invention and comprises the following steps:
First, an execution environment (step 110) is activated and install function of the execution environment is utilized to install components (step 111). The link function of the execution environment is used to build linkages (step 112). After these steps, a graphic program is constructed. Then the output function of a socket is called by a specified component corresponding to this socket, and a specified parameter list is outputted from a specified output port (step 113). The linkage records are searched in the output table of the located socket to locate the input socket and input port corresponding to the output port (step 114). The input socket and the input port aforementioned and the parameter list are packed into a message packet (step 115).

This is then followed by, respectively, entering the critical section of the message queue (step 116). This step prevents other thread to modify the data in the message queue. Then the message packet is pushed onto the end of the message queue (step 117), checking whether the queue thread is initialized (step 118), if not, a new queue thread is created and initialized (step 119), and finally, exiting from the critical section of the message queue (step 120). After all these steps being accomplished, the graphic program starts to run. This program runs continuously by the actions of queue thread.

A component must include a socket member which serves as a reference to the corresponding socket. Each output port functions as an identifier for informing the socket to perform a specified output. Each input port serves as the entry point of a program segment, which can be a break point of a thread (TYPE 1) or a member function of a component (TYPE 2).

The socket is comprised of:
- A component member which is a reference to the corresponding component;
- An output table, using the output port as key and using an input socket and an input port as value, for storing the linkages linked on the output ports;
- A waiting port member for setting a waiting port which is used by wait function;
- A waiting parameter list array for storing input parameters which is used by wait function;
- An output function which is used to pack messages and push them onto the end of the queue thread; and
- A wait function which is used to implement the TYPE 1 input port.

The execution environment includes:
- A message queue for receiving messages for scheduling;
- A socket table, using the socket identifier to fetch the corresponding socket, for storing all the sockets;
- A queue thread for retrieving the messages in the message queue and processing it;
- An install function for creating a new socket object and building a reference between the specified component, then storing the socket into the socket table using the specified identifier as key; and
- A link function for building linkages.

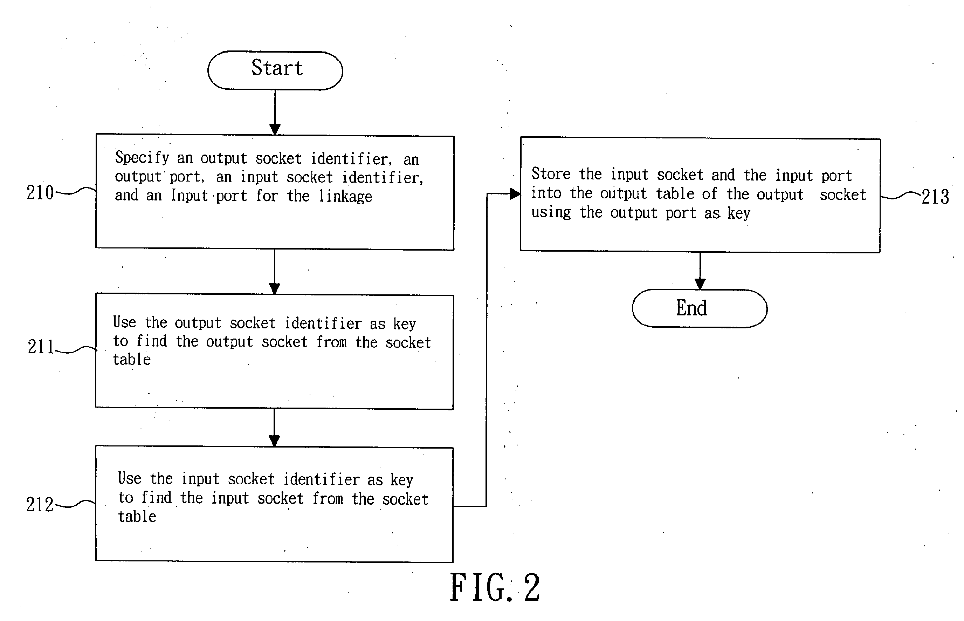

The actions of the link function include (referring to Fig. 2): a. Specifying an output socket identifier, an output port, an input socket identifier, and an input port for the linkage (step 210); b. Using the output socket identifier as key to find the output socket from the socket table (step 211); c. Using the input socket identifier as key to find the input socket from the socket table (step 212); and d. Storing the input socket and the input port into the output table of the output socket using the output port as key (step 213). Using these steps, a linkage is built and stored in the output table of the output socket.

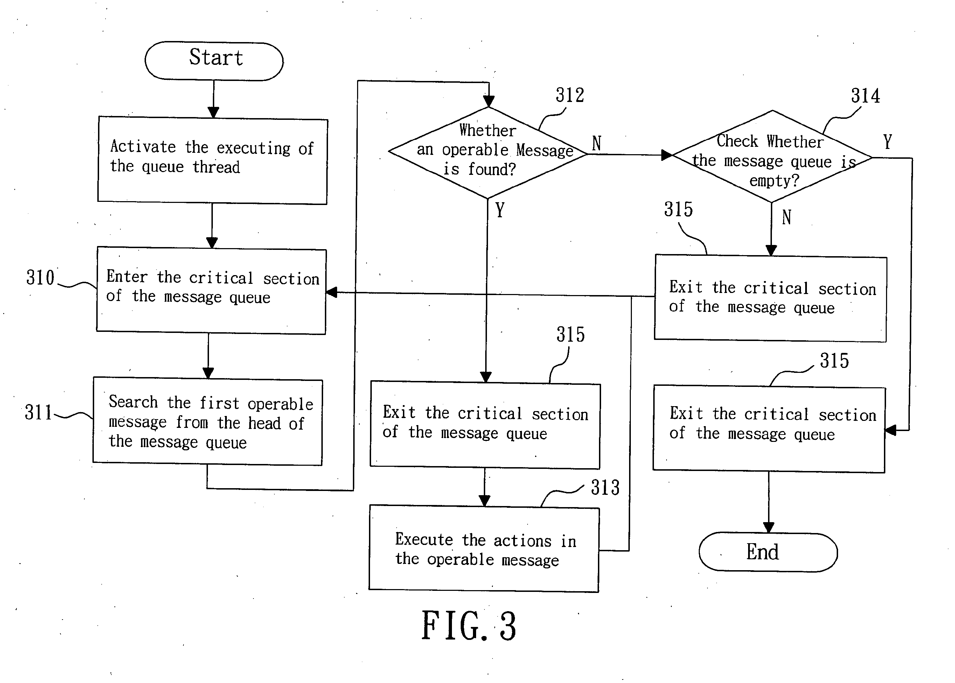

As the queue thread is running, the actions include (referring to Fig. 3): a. Entering the critical section of the message queue (step 310); b. Searching the first operable message from the head of the message queue (steps 311 and 312); c. Executing the actions in the operable message (step 313); and d. Returning to step 310 for the next process cycle.

When no operable message is found at step 312 and the message queue is empty (step 314), the queue thread is terminated and exits from the critical section of the message queue (step 315). It will cause the graphic program to terminate. Otherwise, if the message queue is not empty at step 314, the queue thread instead exits from the critical section of the message queue (step 315) and returns to step 310. Then the next process cycle starts.

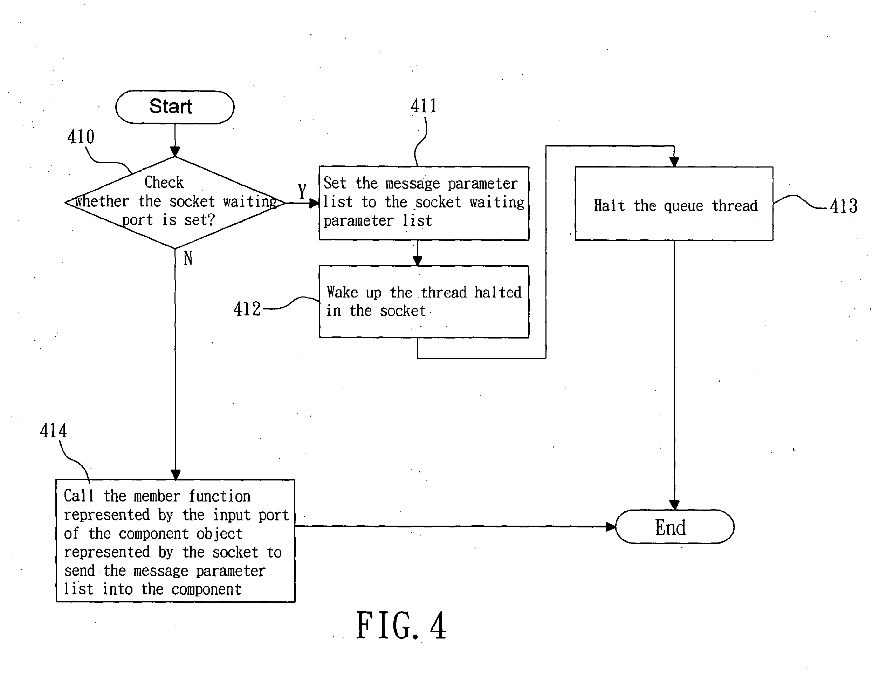

The method for the queue thread to execute the actions recorded in an operable message comprises of the following steps (referring to Fig. 4): a. Checking whether the waiting port of the socket recorded in the message is set (step 410); b. Setting the message parameter list to the waiting parameter list (step 411) when the socket check of step 410 returns true (signifying a TYPE 1 input port); c. Awakening the thread halted in the socket (step 412); and d. Halting the queue thread (step 413). Through this chain of actions, the TYPE 1 input port is activated to retrieve data from waiting parameter list. At step 410, if the waiting port is not set, then the input port is TYPE 2. The queue thread instead calls the member function of the component object corresponding to the socket (step 414). This member function serves as the input port of the component object. Through the parameters of the member function the queue thread sends the message parameter list into the component.

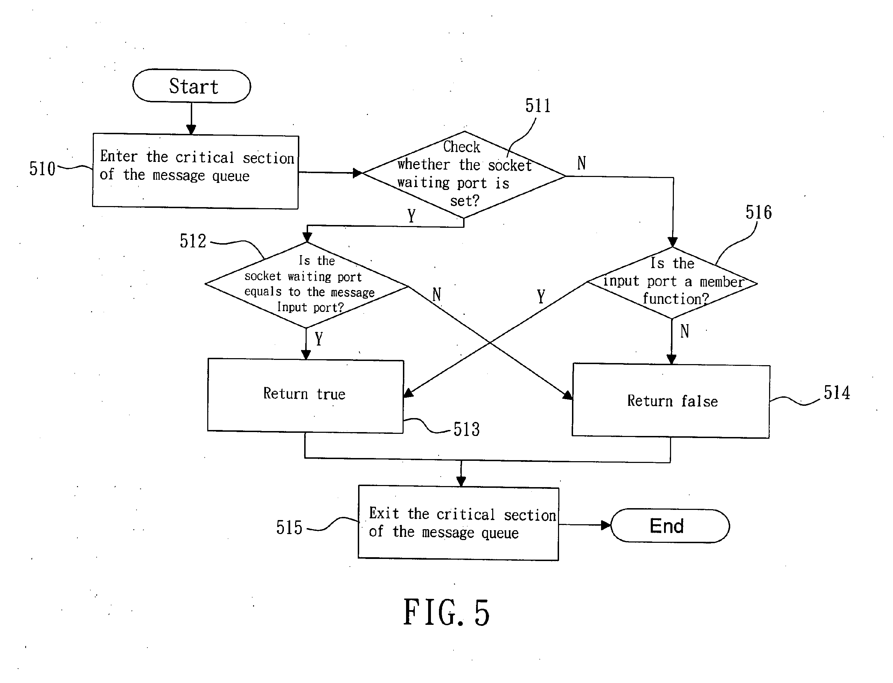

The actions for queue thread to test whether a message is operable comprises of (referring to Fig. 5): a. Entering the critical section of the message queue (step 510); b. Checking whether the waiting port of the socket recorded in the message is set (step 511). The check returns true when the waiting port of the socket equals to the input port recorded in the message (steps 512 and 513), otherwise returns false (steps 512 and 514). In the case that the waiting port of the socket has not been set, the input port is checked for whether it is a member function (step 516), returning true if yes (step 513), and returning false if not (step 514); and c. Exiting the critical section of the message queue (step 515).

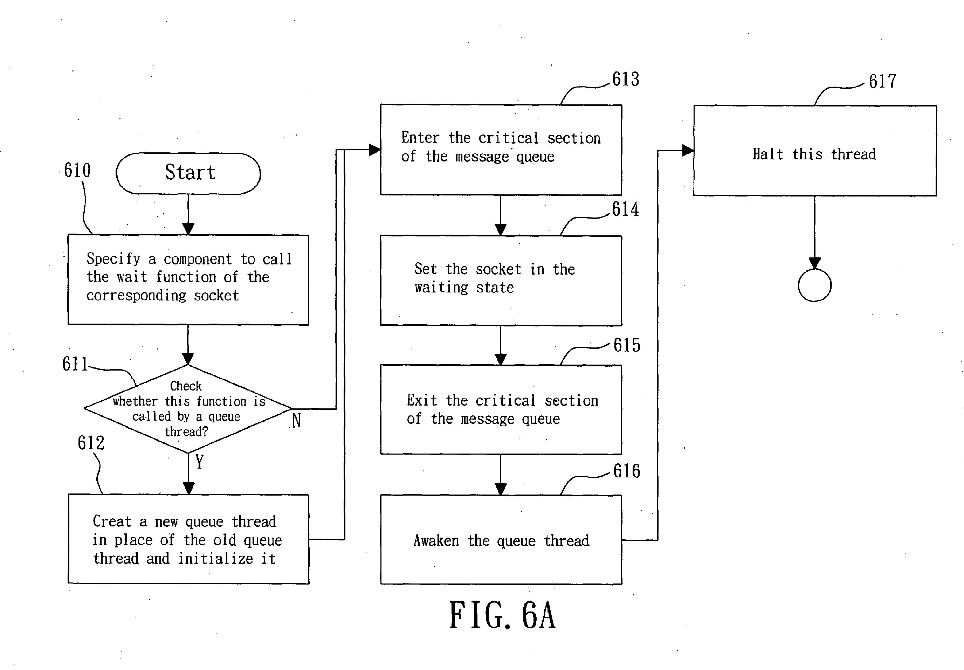

Fig. 6A illustrates the actions for using the TYPE 1 input port until the thread is halted: a. Specifying a component to call the wait function of the corresponding socket (step 610) and specifying a waiting input port; b. Checking whether this function is called by the queue thread (step 611); if yes, creating a new queue thread in place of the old queue thread and initialize it (step 612); c. Entering the critical section of the message queue (step 613); d. Setting the socket in the waiting state (step 614); e. Exiting the critical section of the message queue (step 615); f. Awakening the queue thread (step 616); and g. Halting the current running thread (step 617).

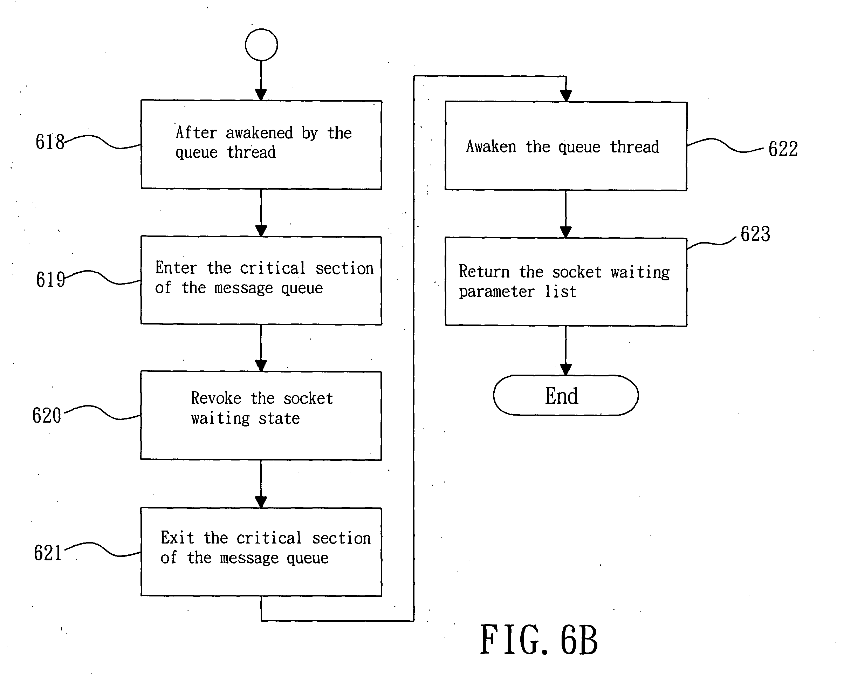

Fig. 6B continues the process of wait function after being awakened by the queue thread (step 618), and enters the critical section of the message queue (step 619). This is followed by the steps described below: a. Revoking the socket waiting state (step 620); b. Exiting the critical section of the message queue (step 621), c. Awakening the queue thread (step 622), and finally, d. Returning the waiting parameter list of the socket (step 623).

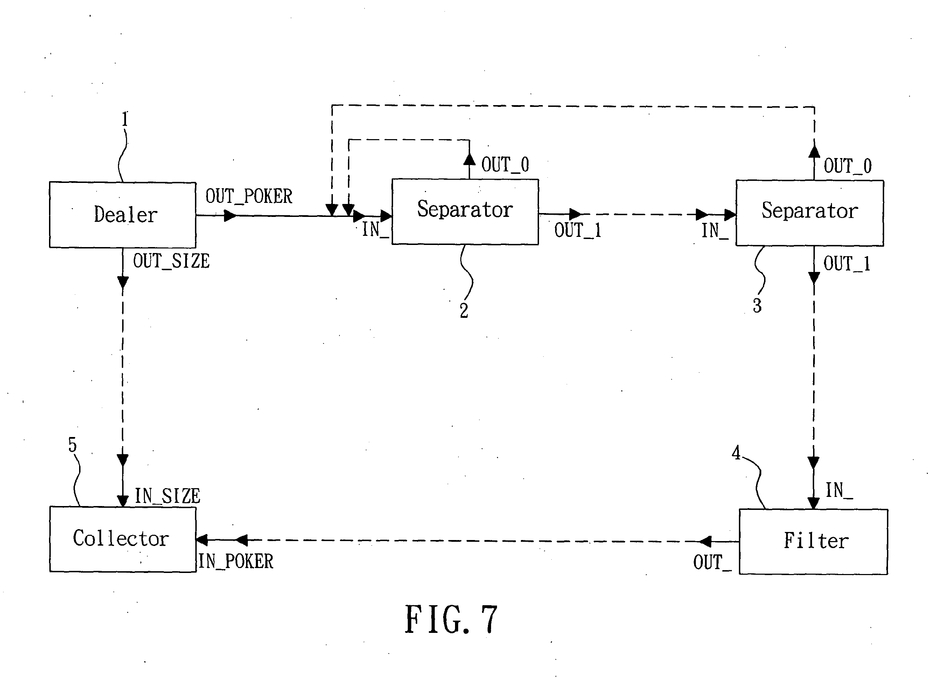

Fig. 7 describes an embodiment of the method for executing a graphic program by using the present invention. A card shuffling program is implemented in the Java programming language. The program is capable of adjusting the randomness of the outcome, handling uncertain number of calls, listing the operation results, and displaying the possibility of overflow caused by the number of invocations.

The following points describe the implementations in the example program:
1. Class ExEnv implements an execution environment, wherein a socket table is implemented by a Hashtable, and the socket identifier is stored as a string. The message queue is implemented by a particular class MessageQueue. In addition to the install function and link function, the defaultExEnv function can be used to fetch the execution environment. The getMethod function can convert a string into the corresponding Java Method object.
2. Class MessageQueue implements the message queue in the execution environment. This class controls the queue thread. After receiving a message from the enqueue function, the enqueue function will check whether the queue thread is null. If the queue thread is null, a new thread is created. The operation of the thread is controlled by class QueueThread.
3. Class QueueThread operates in a loop, to retrieve the messages (class Message) in the message queue one by one, and deliver them to the ExEnv's process function to be processed therein. This thread stops when the message queue is empty.
4. Interface Component is the ancestor of all the components. For increasing the flexibility of the inheritance, it is designed as a Java interface. There is a setSocket function defined in it, to allow the ExEnv to hand over the socket to a component.
5. Class Socket uses a Hashtable to implement the output table. The output port is represented by a string to serve as the key of the output table. The value is an Input object (class Input), which is a data structure for storing the input socket and the input port. The input port is represented by a string and a Java Method object, where the string is used to record the identifier of the input port, and the Java Method object to record the reference to the member function of the input port.

The system designed above is used to implement a card shuffler program (as shown in Fig.7). The operation principle of this program is that there is a Dealer (1), whereby the total number of the cards can be output from the Dealer.OUT_SIZE. The cards are output from the Dealer.OUT_POKER piece by piece. Each card has a count value for counting the number of times passing through the two separators. Each Separator (2, 3) can be assigned a probability (0.1 % in this embodiment) for deciding whether to send a card through OUT_0 or OUT_1. Both the OUT_0 of the two Separators (2, 3) are linked to the IN_ port of the Separator (2), to simulate the actions of shuffle. The probability can be used to control the randomness of shuffle. When each card passes through the Separators (2, 3), the count value will increase by one. The card output from the OUT_1 of the Separators (2, 3), then passes through a Filter (4). Filter (4) is responsible for displaying the frequency of each card passing through the Separators (2, 3). The data of the card is delivered to the Collector (5). The Collector.IN_SIZE receives the information of the total number of card pieces. Subsequently, after having received the same number of cards from the Collector.IN_POKER, all of the cards will be printed out.

-The code of execution environment is:

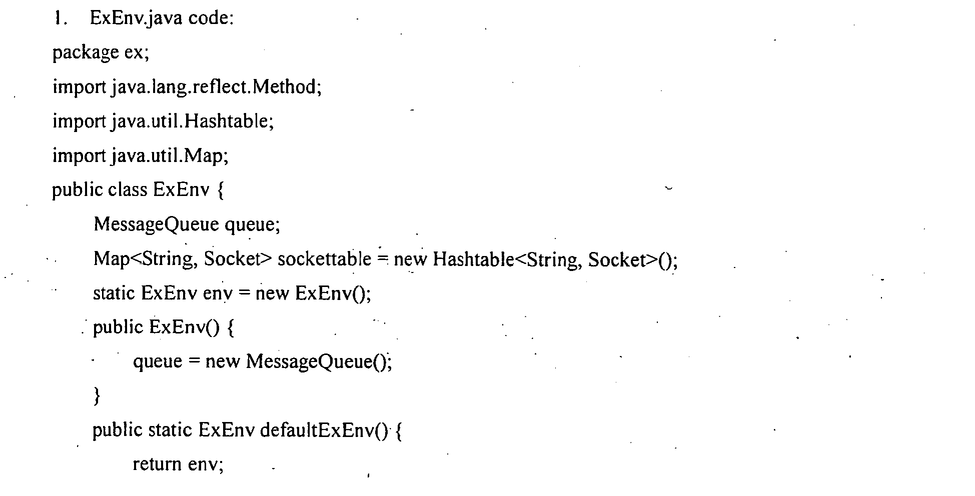

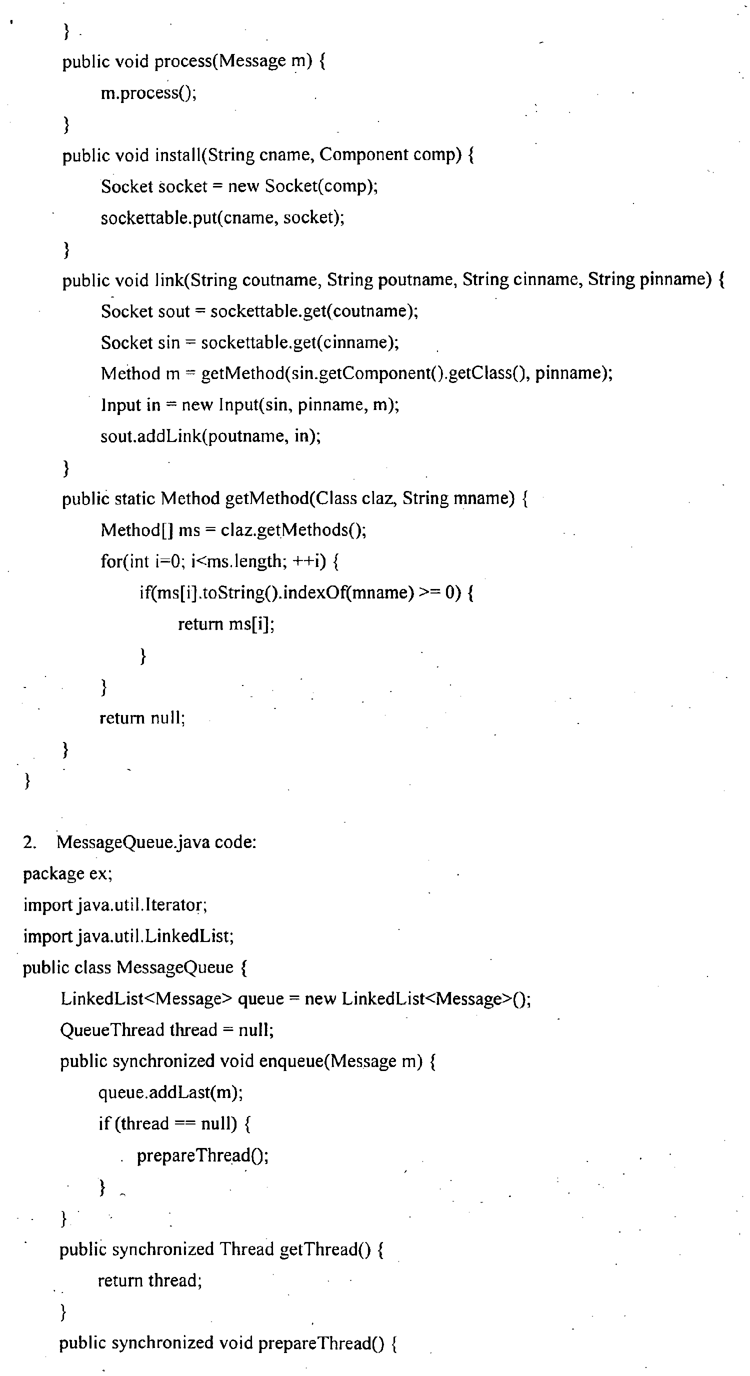

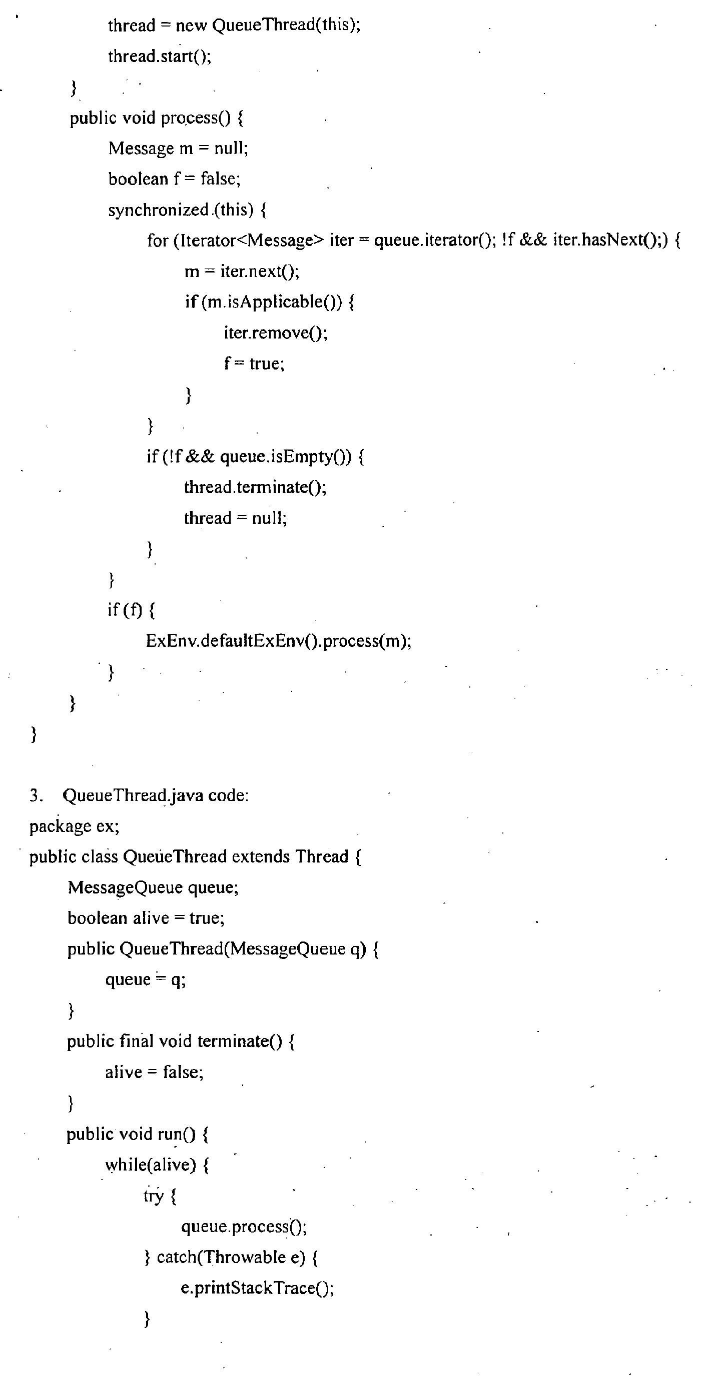

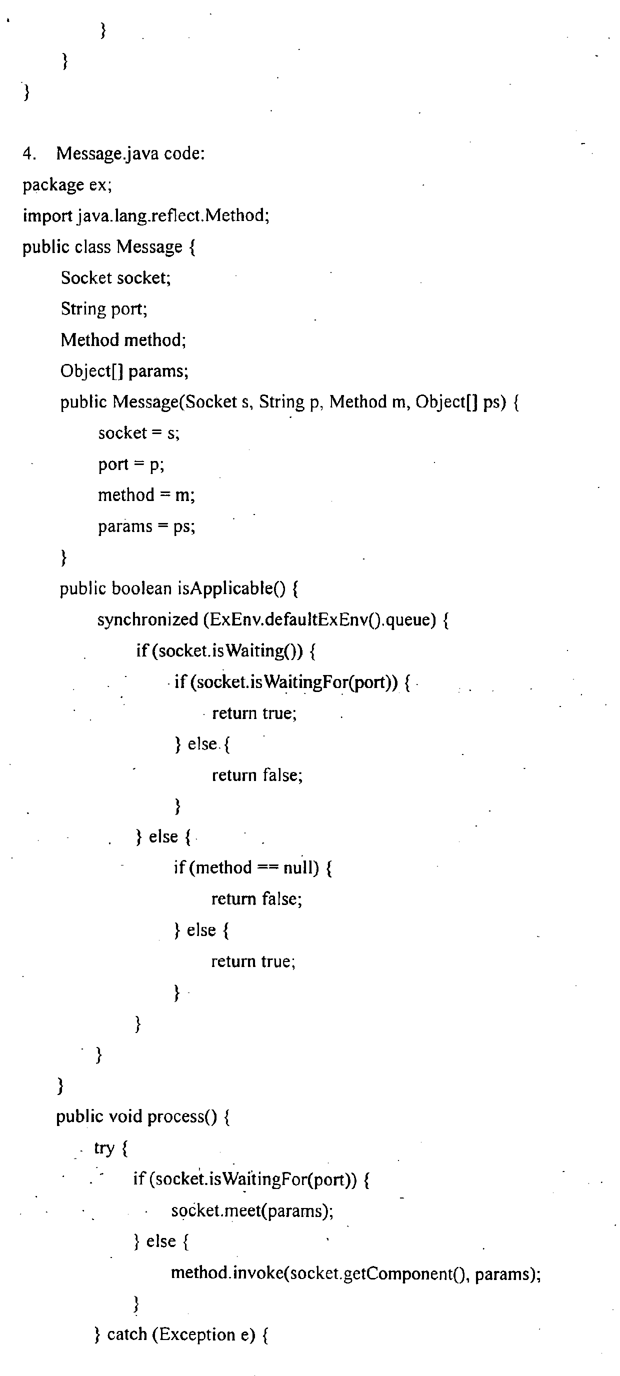

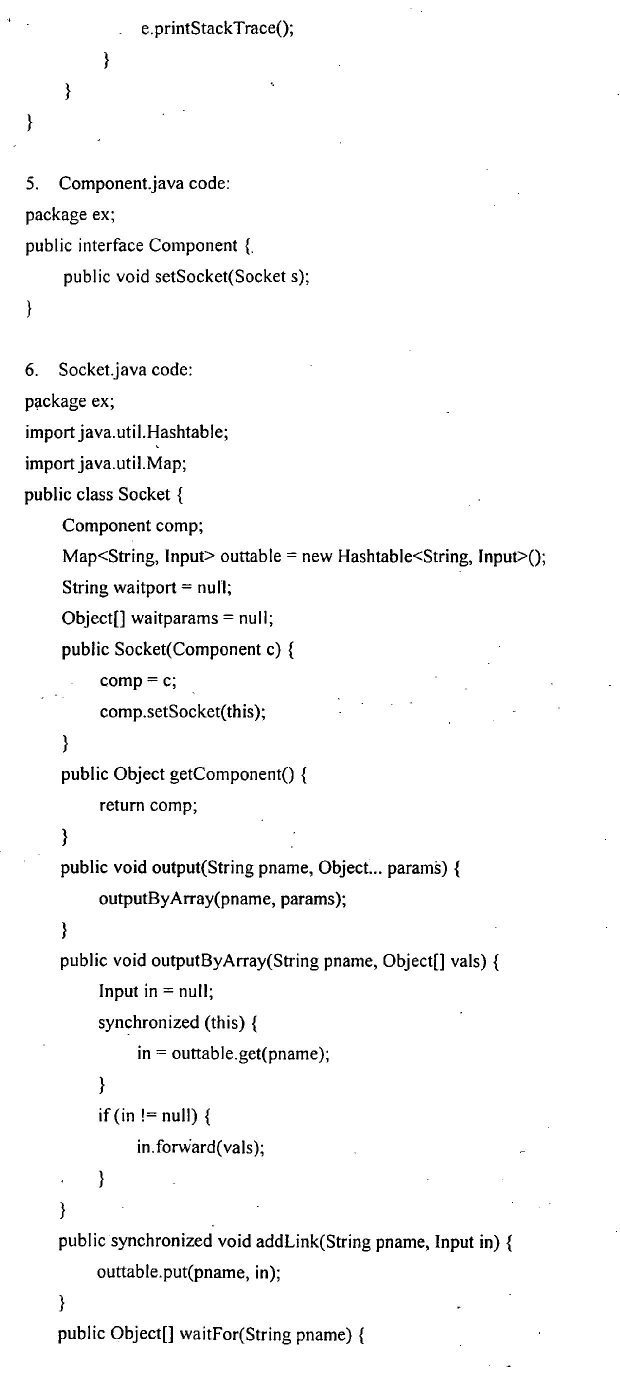

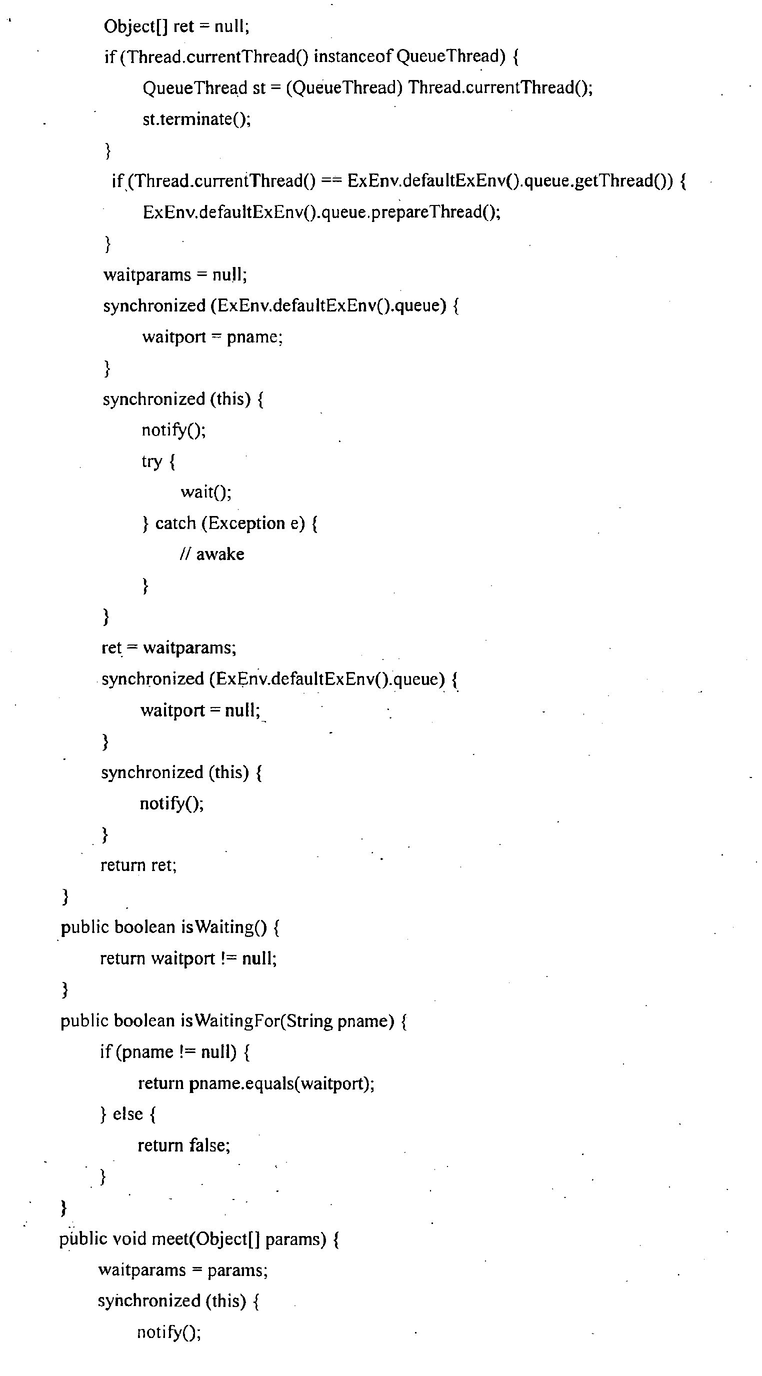

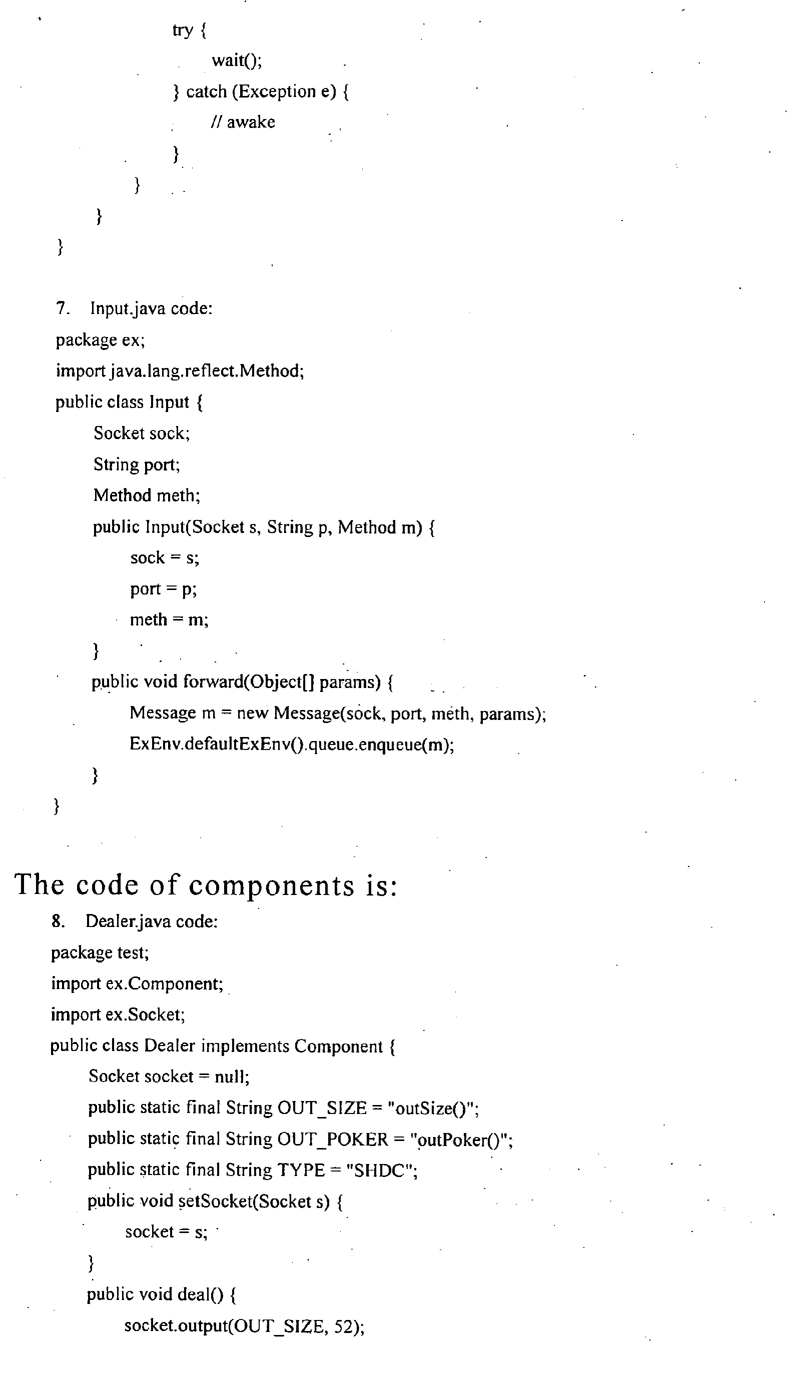

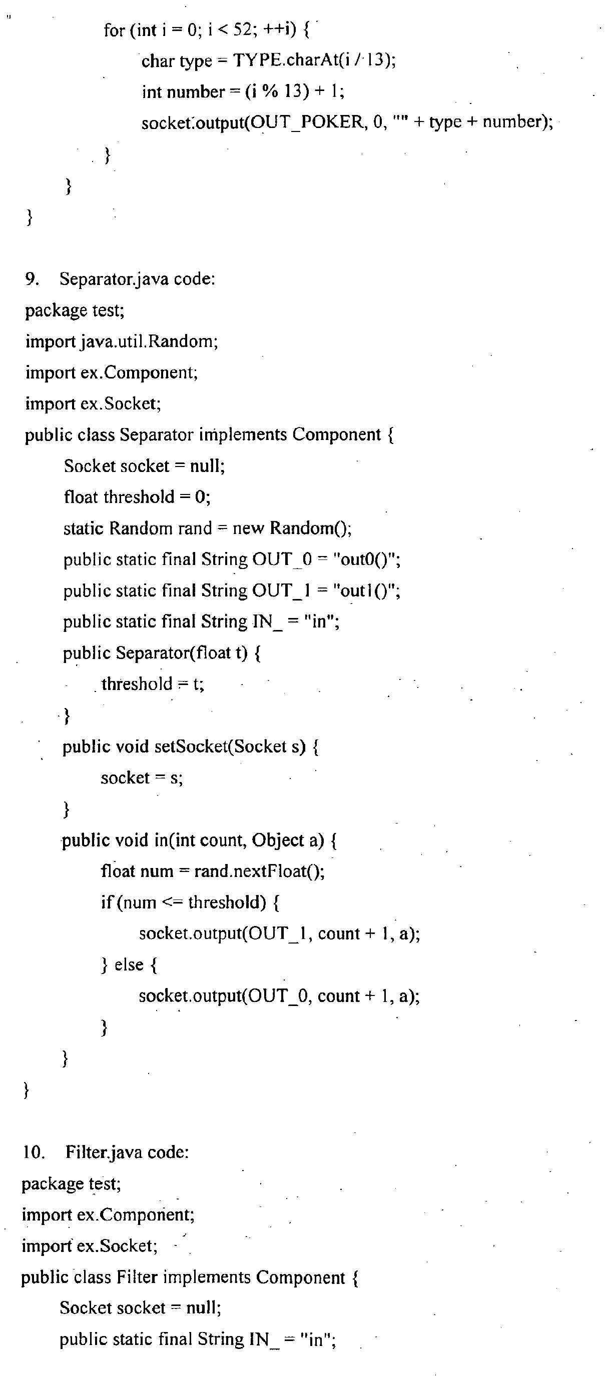

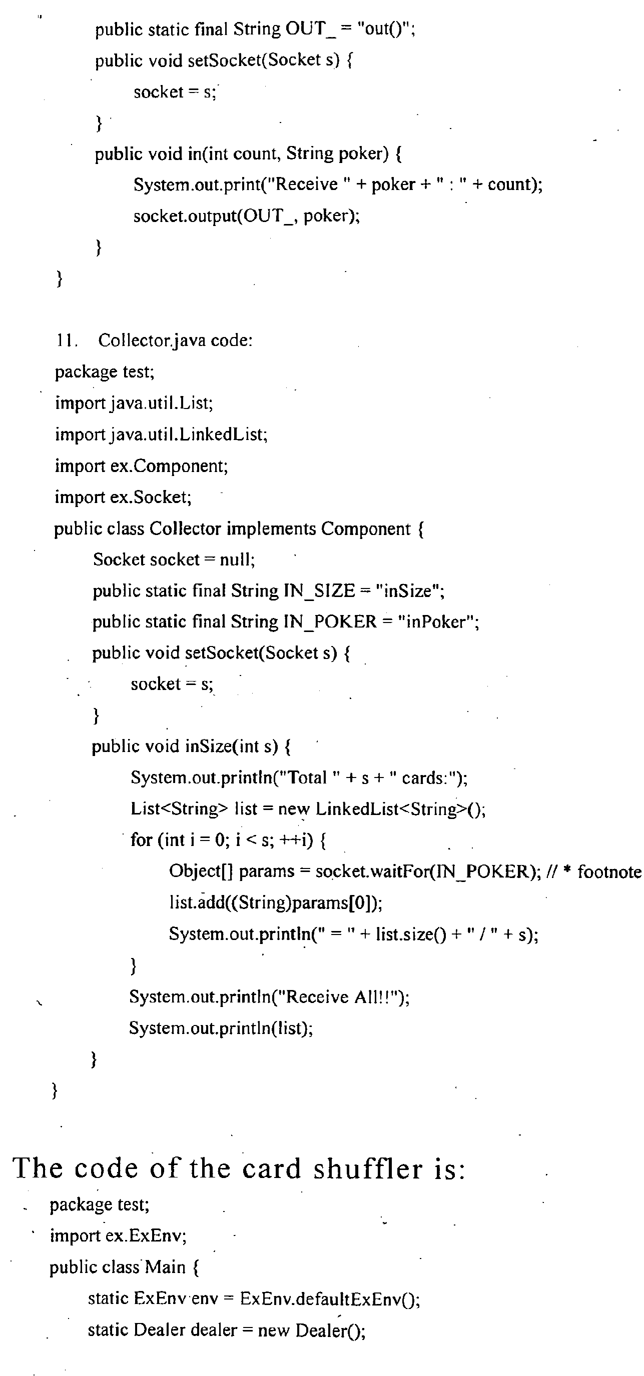

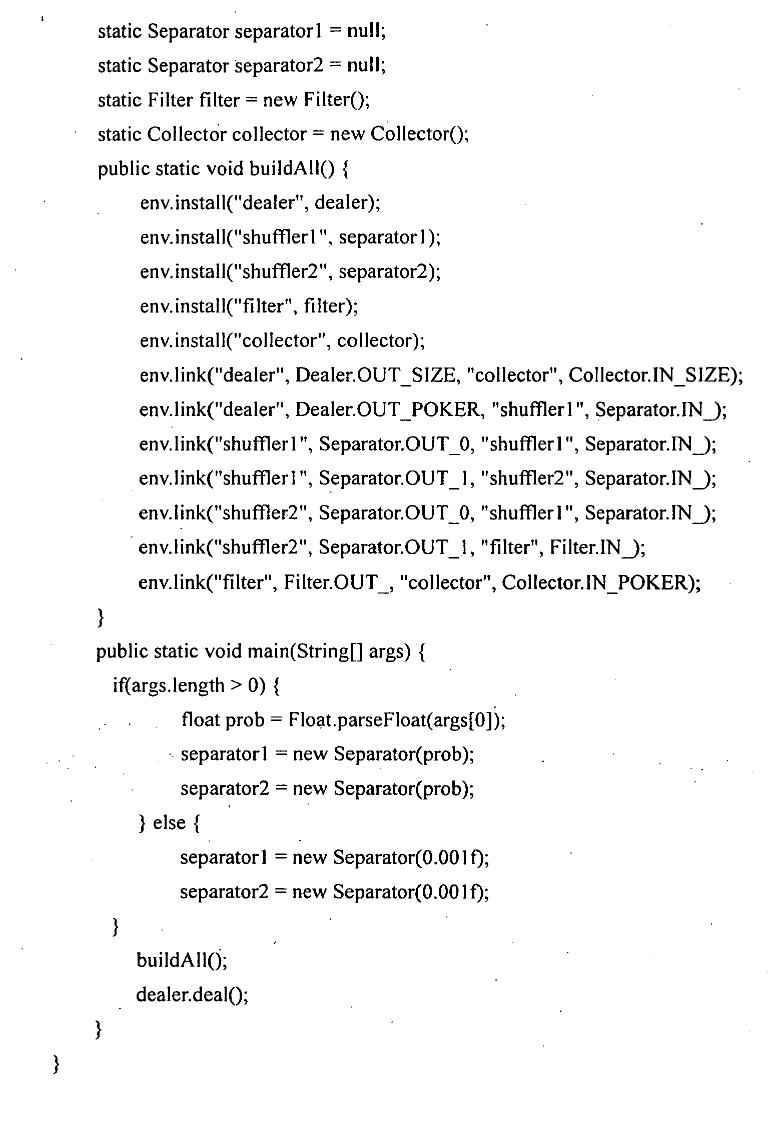

**The result is:**
Total 52 cards:
Receive D5 : 18165 = 1 / 52
Receive H5 : 26885 = 2 / 52
Receive D13 : 63399 = 3 / 52
Receive D9 : 69265 = 4 / 52
Receive S7 : 100528 = 5 / 52
Receive H8 : 118669 = 6 / 52
Receive H11 : 121029 = 7 / 52
Receive S4 : 161679 = 8 / 52
Receive D11 : 176899 = 9 / 52
Receive C3 : 194648 = 10 / 52
Receive D10 : 196618 = 11/52
Receive C2 : 226039 = 12/52
Receive H3 : 231328 = 13/52
Receive C6 : 304830 = 14/52
Receive D2 : 328498 = 15/52
Receive D4 : 449354 = 16 / 52
Receive S3 : 451559 = 17 / 52
Receive S11 : 495678 = 18 / 52
Receive H2 : 531085 = 19 / 52
Receive C9 : 538319 = 20 / 52
Receive C8 : 552058 = 21 / 52
Receive S5 : 651410 = 22 / 52
Receive S1 : 679729 = 23 / 52
Receive S2 : 787596 = 24 / 52
Receive S9 : 804524 = 25 / 52
Receive C 13 : 808506 = 26 / 52
Receive H7 : 830280 = 27 / 52
Receive C7 : 845751 = 28 / 52
Receive C5 : 859051 = 29 / 52
Receive H12 : 871077 = 30 / 52
Receive D6 : 934320 = 31 / 52
Receive S8 : 1038939 = 32 / 52
Receive H9 : 1102430 = 33 / 52
Receive H6 : 1125195 = 34 / 52
Receive D3 : 1153136 = 35 / 52
Receive D1 : 1178391 = 36 / 52
Receive S12 : 1181173 = 37 / 52
Receive D12 : 1204832 = 38 / 52
Receive S10 : 1238532 = 39/52
Receive C12 : 1353145 = 40 / 52
Receive H4 : 1480100 = 41 / 52
Receive H1 : 1530538 = 42 / 52
Receive C4 : 1573158 = 43 / 52
Receive C11 : 1655733 = 44 / 52
Receive S6 : 1722235 = 45 / 52
Receive C10 : 2008879 = 46 / 52
Receive H 13 : 2396188 = 47 / 52
Receive H10 : 2446280 = 48 / 52
Receive C1 : 2494809 = 49 / 52
Receive S13 : 2514632 = 50 / 52
Receive D8 : 3280101 = 51 / 52
Receive D7 : 3359051 = 52 / 52
Receive All!!
[D5, H5, D13, D9, S7, H8, H11, S4, D11, C3, D10, C2, H3, C6, D2, D4, S3, S11, H2, C9, C8, S5, S1, S2, S9, C13, H7, C7, C5, H12, D6, S8, H9, H6, D3, D1, S12, D12, S10, C12, H4, H1, C4, C11, S6, C10, H13, H10, C1, S13, D8, D7]

Accordingly, this embodiment demonstrates:
1. The output port of a component can be linked to its own input port (see SEPARATOR1), thereby the problem of reentrance will not occur.
2. No theoretical limit on the number of parameters.
3. The data output from the Dealer.OUT_SIZE and Dealer.OUT_POKER can be processed sequentially.
4. The stack overflow problem caused by recursive function call is eliminated with the present invention. It can be seen from the output result, that the last card has passed through the separators over 3 million times. This may cause stack overflow if using the techniques of the prior art.
5. One input port (SEPARATOR1.IN_) can be linked by multiple output ports simultaneously, while still maintaining a correct execution.
6. As shown in the member function inSize of the class Collector, the input ports IN_SIZE and IN_POKER are both implemented in this member function. The input port IN_SIZE is TYPE 2. It is implemented as the member function inSize. The input port IN_POKER is TYPE 1. It is implemented as a break point of a thread (footnote 1). By using the waitFor function of the socket, the input port IN_POKER seems like a simple function call to retrieve data, but actually, the running thread pauses at that point to wait the requested input (Referring to Fig. 6A). After the ExEnv passes the proper data to IN_POKER, the thread is awakened, and the function waitFor returns the input data (Referring to Fig. 6B). This method can help programmer to keep several inputs of a continuous procedure together, therefore reducing the complexity of component design.

Accordingly, the present invention uses asymmetric linkages and an asynchronous procedure to implement an execution method of this graphic program. Due to the characteristics of the design, the present invention has the following advantages:
1. Consuming less system resources. In most cases, a graphic program can be treated as a single threaded program.
2. Ability to simulate the multi-tasking effects of a pipeline and a branch.
3. Each component can be considered as an atomic execution procedure to enhance the control of a system.
4. Reducing the complexity of component designing.
5. Fast execution speed.
6. Assuring the sequence of program operation.
7. After the content of a message queue is exhausted, the system stops automatically without the need of additional code for termination.
8. Easy error detection and debugging.

In summary, according to the disclosure described above, the present invention can achieve the expected objectives of the invention of providing a method for executing a graphic program. This should be of great value for the industrial utilization and application, and thus is claimed according to the laws.

## Claims

1. A method for executing a graphic program, comprising the steps of:
a. Activating an execution environment;
b. Using the install function of the execution environment to install components;
c. Using the link function of the execution environment to build linkages;
d. Calling the output function by a specified component using a corresponding socket, and outputting a specified parameter list from a specified output port;
e. Using the output table of the located socket to find the input socket and input port corresponding to the output port;
f. Packing the input socket, the input port that found and the parameter list into a message packet;
g. Entering the critical section of the message queue;
h. Pushing the message packet onto the end of the message queue;
i. Activating the queue thread; and
j. Exiting from the critical section of the message queue.

2. The method for executing a graphic program according to claim 1, wherein if no thread is activated at step i, a new queue thread is created and is activated.

3. The method for executing a graphic program according to claim 1, wherein the actions of said queue thread comprises of:
a. Entering the critical section of the message queue;
b. Searching the first operable message from the head of the message queue;
c. Executing the actions in the operable message; and
d. Return to step a.

4. The method for executing a graphic program according to claim 3, wherein when no operable message is found at step b, and the message queue is empty already, then the queue thread is terminated, and exits from the critical section of the message queue.

5. The method for executing a graphic program according to claim 3, wherein when no operable message is found and the message queue is not empty at step b, the queue thread exits from the critical section of the message queue and returns to step a.

6. The method for executing a graphic program according to claim 3, wherein said executing the actions in the operable message includes:
a. Checking whether the socket waiting port is set;
b. Setting the message parameter list to the socket waiting parameter list if the socket waiting port is set;
c. Waking up the thread halted in the socket; and
d. Halting the queue thread.

7. The method for executing a graphic program according to claim 6, wherein at step a, wherein as the socket waiting port has not been set, the member function presented by the input port of the component represented by the socket is called, and the message parameter list are sent into it.

8. The method for executing a graphic program according to claim 3, wherein the actions for testing whether a message is operable comprises of:
a. Entering the critical section of the message queue;
b. Checking whether the socket waiting port is set;
c. Under the condition of the socket waiting port being set, Returning true when the socket waiting port is equal to the message input port, returning false when not equal to the message input port; and
d. Exiting from the critical section of the message queue.

9. The method for executing a graphic program according to claim 8, wherein at step b, if the socket waiting port has not been set, then the queue thread checks whether the input port is a member function, returning true if yes, returning false if not. Afterwards, the queue thread exits the critical section of the message queue.

10. The method for executing a graphic program according to claim 8, wherein the actions for the socket waiting for a certain input port comprises of:
a. Specifying a component to call the wait function of its corresponding socket, and specify a waiting input port;
b. Creating and initializing a new queue thread in place of the old queue thread if said function is called by the queue thread;
c. Entering the critical section of a message queue;
d. Setting the socket in the waiting state;
e. Exiting the critical section of the message queue;
f. Awakening the queue thread;
g. Halting the thread;
h. Entering the critical section of the message queue after being awakened by the queue thread;
i. Revoking the socket waiting state;
j. Exiting the critical section of the message queue;
k. Awakening the queue thread; and.
1. Returning the socket waiting parameter list.

11. The method for executing a graphic program according to claim 1, wherein said execution environment includes:
a. A message queue for receiving messages for scheduling;
b. A socket table, with the identifier of a component as key and a socket as value, for storing sockets;
c. A queue thread for retrieving the information in the message queue and processing it;
d. An install function for creating a new socket object and build a reference between a component and store the socket into the socket table using the specified identifier as key; and
e. A link function for building linkages.

12. The method for executing a graphic program according to claim 11, wherein the actions of said link function comprises of:
a. Specifying an output socket identifier, an output port, an input socket identifier, and an input port of the linkage;
b. Using the output socket identifier as key to find the output socket from the socket table;
c. Using the input socket identifier as key to find the input socket from the socket table; and
d. Storing the input socket and the input port into the output table of the output socket using the output port as key.

13. The method for executing a graphic program according to claim 1, wherein said socket includes:
a. A component member for locating a corresponding component;
b. An output table with output port as key, and the input socket and input port as value;
c. A waiting port member for setting a waiting port;
d. A waiting parameter list array for storing input parameters;
e. An output function; and
f. A wait function.

14. The method for executing a graphic program according to claim 1, wherein said component includes a socket member for locating the corresponding socket.

15. The method for executing a graphic program according to claim 1, wherein said output port serves as an identifier for informing the socket to perform a specified output.

16. The method for executing a graphic program according to claim 1, wherein said input port is the entry point of a program segment, which has two types:
a. A member function; and
b. A break point of a thread.
